# EUROPÄISCHE PATENTANMELDUNG

(11) **EP 4 096 068 A1**
(43) Veröffentlichungstag der Anmeldung: **30.11.2022**
(21) Anmeldenummer: 21176006.1
(22) Anmeldetag: 26.05.2021
(51) Int. Cl.: H02K 7/18, H02K 16/00, F03B 17/06

(54) **GENERATORVORRICHTUNG ZUR WANDLUNG VON BEWEGUNGSENERGIE IN ELEKTRISCHE ENERGIE**

(71) Anmelder: Alkan, Mehmet, 9450 Lüchingen (CH)
(72) Erfinder: Alkan, Mehmet, 9450 Lüchingen (CH)
(74) Vertreter: Gachnang AG Patentanwälte

(57) **Zusammenfassung**

Die Erfindung betrifft eine Generatorvorrichtung zur Erzeugung von elektrischem Strom basierend auf einer magnetischen Wechselwirkung zwischen einem drehenden Permanentmagneten und drehbaren weiteren Permanentmagneten.

## Beschreibung

### -FACHGEBIET DER ERFINDUNG-

Die Erfindung betrifft im Allgemeinen eine Generatorvorrichtung zur Wandlung von Bewegungsenergie in elektrische Energie. Im Spezifischen betrifft die Erfindung eine Generatorvorrichtung zur Erzeugung von elektrischem Strom basierend auf einer magnetischen Wechselwirkung zwischen einem drehenden Permanentmagneten und drehbaren weiteren Permanentmagneten.

### -HINTERGRUND-

Elektrische Generatoren gemäss dem Stand der Technik können hinsichtlich ihrer Anwendungsmöglichkeiten und Wartungsaspekte weiter optimiert werden. Insbesondere ist es von Interesse elektrische Generatoren dahingehend zu verbessern, dass sie in diversen Umgebungen eingesetzt werden können, beispielsweise im Wasser oder an der Luft, und auch von diversen Antriebsmitteln angetrieben werden können. Des Weiteren ist es von Interesse elektrische Generatoren bereitzustellen die möglichst wartungsarm sind und gleichzeitig eine einfache Wartung und Wiederinstandsetzung ermöglichen.

### -BESCHREIBUNG DER ERFINDUNG-

Daher ist es Aufgabe der Erfindung einen elektrischen Generator bzw. eine Generatorvorrichtung bereitzustellen, welche einen vielfältigen Einsatz ermöglicht, wartungsarm ist und gleichzeitig einfach gewartet werden kann.

Diese Aufgabe wird durch eine erfindungsgemässe Generatorvorrichtung gelöst.

Die Erfindung betrifft eine Generatorvorrichtung zur Erzeugung von elektrischem Strom basierend auf einer magnetischen Wechselwirkung zwischen einem drehbaren Haupt-Permanentmagneten und zumindest zwei drehbaren Peripher-Permanentmagneten. Dazu umfasst die Generatorvorrichtung den Haupt-Permanentmagneten, der sich entlang einer Haupt-Drehachse erstreckt und um die Haupt-Drehachse drehbar gelagert ist, einen Drehantrieb zum Drehen des Haupt-Permanentmagneten, eine Wand, die sich entlang der Haupt-Drehachse und einer Umfangsrichtung um den Haupt-Permanentmagneten erstreckt, und die zumindest zwei, insbesondere eine Vielzahl, Peripher-Permanentmagnete, wobei die Peripher-Permanentmagnete um jeweilige Peripher-Drehachsen drehbar gelagert sind. Des Weiteren weist die Generatorvorrichtung zumindest zwei, insbesondere eine Vielzahl, elektrischer Generatoren auf. Die Peripher-Permanentmagnete sind jeweils mit einer drehbaren Antriebswelle eines jeweiligen elektrischen Generators gekoppelt. Die Wand ist zwischen dem Haupt-Permanentmagneten und den Peripher-Permanentmagneten angeordnet. Die zumindest zwei elektrischen Generatoren sind so entlang der Haupt-Drehachse und der Umfangsrichtung verteilt, insbesondere und an der Wand befestigt, angeordnet, dass eine Drehung des Haupt-Permanentmagneten, mittels des Drehantriebs, eine Drehung der Peripher-Permanentmagnete und dadurch der Antriebswellen der elektrischen Generatoren bewirkt.

Der Haupt-Permanentmagnet kann ein eisen-, kobalt-, nickel-, ferrit-basierter Permanentmagnet sein. Der Haupt-Permanentmagnet kann auch ein auf seltenen Erden basierter Permanentmagnet sein. Beispielsweise kann der Haupt-Permanentmagnet ein neodym-, samarium-, praseodym-, dysprosium-, terbium-, gadolinium-basierter Permanentmagnet sein. Dabei sind auf seltenen Erden basierende Permanentmagnete besonders vorteilhaft aufgrund ihrer hohen Energiedichte, d.h. aufgrund ihrer hohen, auf das Volumen des Magneten bezogenen, magnetischen Energie.

Der Haupt-Permanentmagnet kann einstückig ausgebildet sein.

Der Haupt-Permanentmagnet kann mehrere Teil-Permanentmagnete aufweisen die nebeneinander entlang der Haupt-Drehachse angeordnet sind und den Haupt-Permanentmagneten bilden.

Durch die Erstreckung entlang der Haupt-Drehachse wird eine magnetische Wirkung die von dem Haupt-Permanentmagneten ausgeht entlang eines möglichst grossen Bereichs entlang der Haupt-Drehachse bereitgestellt.

Der Haupt-Permanentmagnet kann, bezogen auf die Haupt-Drehachse, rotationssymmetrisch ausgebildet sein, beispielsweise zylinderförmig, kugelförmig, kegelförmig, quaderförmig, zahnradförmig, turbinenradförmig, förderschneckenförmig etc.

Gegebenenfalls können Teil-Permanentmagnete bezogen auf die Haupt-Drehachse rotationssymmetrisch ausgebildet sein, beispielsweise zylinderförmig, kugelförmig, kegelförmig, quaderförmig, zahnradförmig, turbinenradförmig, förderschneckenförmig etc.

Der Drehantrieb dient dazu den Haupt-Permanentmagneten um die Haupt-Drehachse zu drehen. Der Drehantrieb ist dazu ausgelegt, um mittels auf ihn einwirkender Bewegungsenergie den Haupt-Permanentmagneten zu drehen.

Die Wand ist dazu ausgelegt einen Raum in dem der Haupt-Permanentmagnet drehbar gelagert ist gegen einen Raum in dem die elektrischen Generatoren und die Peripher-Permanentmagnete angeordnet sind abzugrenzen. Durch diese Abgrenzung kann ein Mediumaustausch zwischen den Räumen kontrolliert werden. Beispielsweise kann dadurch ein Mediumaustausch verhindert werden oder ein solcher gezielt und kontrolliert erfolgen. Eine solche Abgrenzung ermöglicht beispielsweise einen Austausch von Komponenten die im einen Raum angeordnet sind unabhängig von den Komponenten die im anderen Raum angeordnet sind. Dadurch wird die Wartung und/oder Wiederinstandsetzung der Generatorvorrichtung erheblich vereinfacht. Eine solche Abgrenzung ermöglicht auch, dass die Generatorvorrichtung wartungsarm ausgelegt werden kann.

Die Wand kann der Anordnung der elektrischen Generatoren und der Peripher-Permanentmagnete dienen. Eine solche Anordnung kann beispielsweise über eine Halterung erflogen, wobei dann ein jeweiliger elektrischer Generator mittels der Halterung an der Wand befestigt ist. Die Halterung kann beispielsweise Stützen und/oder Streben aufweisen die eine Position und Lage des jeweiligen elektrischen Generators relativ zur Wand stabilisieren/fixieren, bzw. die den jeweiligen elektrischen Generator positions- und lage-fest an der Wand befestigen.

Die Wand kann aus einem kunststoffbasierten Material ausgebildet sein. Beispielsweise kann die Wand aus einem thermoplastischen oder duroplastischen Material ausgebildet sein. Die Wand kann auch aus natur- oder kunststofffaserbasiertem Material ausgebildet sein. Vorzugsweise ist die Wand aus einem elektrisch nichtleitenden, bzw. elektrisch isolierenden Material ausgebildet.

Die Wand kann, bezogen auf die Haupt-Drehachse, rotationssymmetrisch ausgebildet sein, beispielsweise zylinderförmig, kugelförmig, kegelförmig, quaderförmig, zahnradförmig etc.

Ein Peripher-Permanentmagnet kann ein eisen-, kobalt-, nickel-, ferrit-basierter Permanentmagnet sein. Der Peripher-Permanentmagnet kann auch ein auf seltenen Erden basierter Permanentmagnet sein. Beispielsweise kann der Peripher-Permanentmagnet ein neodym-, samarium-, praseodym-, dysprosium-, terbium-, gadolinium-basierter Permanentmagnet sein.

Typischerweise ist jeder Peripher-Permanentmagnet um eine jeweilige Peripher-Drehachse angeordnet. Es können mehrere Peripher-Permanentmagnete um dieselbe Peripher-Drehachse angeordnet sein. Dadurch ist jeder Peripher-Permanentmagnet um eine Peripher-Drehachse drehbar.

Die elektrischen Generatoren können elektrische Generatoren gemäss dem Stand der Technik sein. Die elektrischen Generatoren sind typischerweise Drehgeneratoren, die einen Stator und einen Rotor aufweisen und mittels elektromagnetischer Induktion Bewegungsenergie in elektrische Energie umwandeln. Jeder der Generatoren erzeugt dabei elektrische Energie. Jeder elektrische Generator hat eine drehbare Antriebswelle zur Drehung des Rotors.

Typischerweise ist jeder Peripher-Permanentmagnet mit einer jeweiligen drehbaren Antriebswelle eines jeweiligen elektrischen Generators gekoppelt. Es können mehrere Peripher-Permanentmagnete mit derselben drehbaren Antriebswelle gekoppelt sein. Dabei ist die Kopplung derartig, dass eine Drehung eines Peripher-Permanentmagneten um eine Peripher-Drehachse eine Drehung der Antriebswelle eines Generators bewirkt.

Die Anordnung der elektrischen Generatoren entlang der Haupt-Drehachse und der Umfangsrichtung ist so gewählt, dass das sich mit der Drehung des Haupt-Permanentmagneten ändernde Magnetfeld, eine maximal mögliche Drehung aller Peripher-Permanentmagnete um die jeweiligen Peripher-Drehachsen bewirkt. Dies Anordnung betriff hauptsächlich den Abstand zum Haupt-Permanentmagneten, bzw. zur Haupt-Drehachse und die Ausrichtung der Antriebswellen der elektrischen Generatoren in Bezug auf die Haupt-Drehachse.

Das Funktionsprinzip der erfindungsgemässen Generatorvorrichtung kann folgendermassen zusammengefasst werden: Eine Bewegungsenergie wirkt auf den Drehantrieb ein. Der Drehantrieb bewirkt basierend darauf eine Drehung des Haupt-Permanentmagneten. Die Drehung des Haupt-Permanentmagneten bewirkt mittels magnetischer Wechselwirkung eine Drehung der Peripher-Permanentmagnete um die Peripher-Drehachsen. Die Drehung der Peripher-Permanentmagnete bewirkt eine Drehung der Rotoren der elektrischen Generatoren. Dadurch erzeugen die elektrischen Generatoren elektrische Energie. Somit wandelt die erfindungsgemässe Generatorvorrichtung Bewegungsenergie in elektrische Energie um.

Gemäss einer Ausführungsform weist der Drehantrieb eine Drehantriebswelle auf. Dabei ist der Haupt-Permanentmagnet drehfest mit der Drehantriebswelle verbunden.

Dabei bewirkt der Drehantrieb ein Drehen der Drehantriebswelle wodurch eine Drehung des Haupt-Permanentmagneten bewirkt wird. Der Haupt-Permanentmagnet kann beispielsweise an der Drehantriebswelle festgeklemmt sein. Der Haupt-Permanentmagnet kann auch mittels eines Fügeverfahrens an der Drehantriebswelle befestigt sein. Der Haupt-Permanentmagnet kann auch zumindest einen Teil der Drehantriebswelle bilden. Der Haupt-Permanentmagnet kann auch einen Durchgang, beispielsweise eine Bohrung, aufweisen durch welchen die Drehantriebswelle durchgeführt ist. Dabei ist der Haupt-Permanentmagnet über den Durchgang drehfest mit der Drehantriebswelle verbunden.

Die Drehantriebswelle kann auch Drehantriebswellenbereiche aufweisen die sich unabhängig voneinander mit unterschiedlichen Drehraten drehen können. Beispielsweise kann dann ein jeweiliger Teil-Permanentmagnet des Haupt-Permanentmagneten drehfest mit einem jeweiligen Drehantriebswellenbereich verbunden sein.

Gemäss einer vorteilhaften Ausführungsform weist der Drehantrieb ein propellerförmiges Drehantriebselement auf, das drehfest mit der Drehantriebswelle verbunden ist, insbesondere wobei der Haupt-Permanentmagnet als das propellerförmige Drehantriebselement ausgebildet ist. Der Haupt-Permanentmagnet kann auch durch jeweilige Teil-Permanentmagnete die in jeweiligen radial äusseren Bereichen des propellerförmigen Drehantriebselementes angeordnet sind gebildet werden.

Das propellerförmige Drehantriebselement ist dazu ausgelegt die Bewegungsenergie, die von einem, das propellerförmige Drehantriebselement umströmenden, Medium auf das propellerförmige Drehantriebselement einwirkt, möglichst effizient zu nutzen, um sich selbst zu drehen und damit die Drehantriebswelle anzutreiben. Das Medium kann flüssig oder gasförmig und/oder ein Fluid sein bzw. die Eigenschaften eines Fluides aufweisen. Beispielsweise kann das Medium Wasser, Dampf, Luft, Schüttgut etc. sein.

Das propellerförmige Drehantriebselement ermöglicht dabei das Antreiben bzw. das Drehen des Haupt-Permanentmagneten um die Haupt-Drehachse mittels eines, das propellerförmige Drehantriebselement umströmenden, Mediums.

Gemäss einer vorteilhaften Ausführungsform bildet die Wand entlang der Haupt-Drehachse einen Strömungsraum, der dazu ausgelegt ist von einem Medium durchströmt zu werden, wobei der Haupt-Permanentmagnet und der Drehantrieb so im Strömungsraum angeordnet sind, dass ein durch den Strömungsraum strömendes Medium den Drehantrieb, insbesondere mittels des propellerförmigen Drehantriebselements, antreibt.

Der Strömungsraum kann, bezogen auf die Haupt-Drehachse, rotationssymmetrisch ausgebildet sein, beispielsweise zylinderförmig, kugelförmig, kegelförmig, quaderförmig, zahnradförmig etc., wobei die Ausbildung des Strömungsraums zu einem grossen Teil von der Wand vorgegeben wird.

Der Strömungsraum kann dazu ausgelegt sein ein strömungsfähiges Medium zum Drehantrieb zu leiten, sodass die, durch das strömungsfähige Medium auf ihn, insbesondere auf das propellerförmige Drehantriebselement, einwirkende, Bewegungsenergie bzw. Strömungsenergie vom Drehantrieb, effizient nutzbar ist, um ein Drehen des Haupt-Permanentmagneten zu bewirken.

Typischerweise ist ein, zumindest wesentlicher, Teil des Drehantriebs und der Haupt-Permanentmagnet im Strömungsraum angeordnet. Somit wird der Drehantrieb und auch der Haupt-Permanentmagnet vom Medium umströmt.

Gemäss einer Ausführungsform weist die Wand Öffnungen auf, die dazu ausgelegt sind von dem durch den Strömungsraum strömenden Medium durchströmt zu werden, sodass das Medium zu den elektrischen Generatoren strömt.

Die Öffnungen können beispielsweise Löcher oder Schlitze in der Wand sein. Die Öffnungen können auch Teil von einer Mediumverbindung sein, die den Strömungsraum zu einem elektrischen Generator hin verbinden. Durch eine solche Mediumverbindung können beispielsweise kontrolliert Teile des Mediums, das den Strömungsraum durchströmt, zu einem elektrischen Generator geführt werden, sodass der elektrische Generator davon ebenfalls umströmt wird. Dadurch kann beispielsweise ein Wärmeübertrag zwischen elektrischem Generator und Medium ermöglicht werden.

Gemäss einer Ausführungsform ist die Wand zylinderförmig.

Gemäss einer Ausführungsform weist der Drehantrieb weitere propellerförmige Drehantriebselemente auf die drehfest mit der Drehantriebswelle verbunden sind. Die Wand bildet einen kegelförmigen Strömungsraum, wobei sich der Strömungsraum in eine Richtung entlang der Drehantriebswelle radial verengt, und die propellerförmigen Drehantriebselemente entlang der Drehantriebswelle angeordnet sind, insbesondere wobei eine radiale Ausdehnung eines jeweiligen propellerförmigen Drehantriebselements an eine jeweilige radiale Ausdehnung des Strömungsraumes so angepasst ist, dass das propellerförmige Drehantriebselement innerhalb des Strömungsraums antreibbar angeordnet ist.

Die Drehantriebswelle ist dabei mittig im kegelförmigen Strömungsraum angeordnet. Die Drehantriebselemente sind bezogen auf eine Strömungsrichtung in welcher ein Medium den Strömungsraum durchströmt hintereinander angeordnet. Auf ein Drehantriebselement mit einer radialen Ausdehnung folgt dahinter angeordnet ein weiteres Drehantriebselement mit einer radialen Ausdehnung die kleiner ist als die radiale Ausdehnung des davorliegenden Drehantriebselements. Der kegelförmige Strömungsraum bewirkt eine sich entlang der Drehantriebswelle ändernde Strömungsdynamik. Typischerweise erhöht sich dadurch die Strömungsgeschwindigkeit des durch den Strömungsraum strömenden Mediums von einem Ort mit grösserer radialer Ausdehnung zu einem Ort mit geringerer radialer Ausdehnung.

Der kegelförmige Strömungsraum lässt sich beispielsweise mit einer Drehantriebswelle die mehrere Drehantriebswellenbereiche aufweist und einem Haupt-Permanentmagneten der Teil-Permanentmagnete aufweist kombinieren.

Der Haupt-Permanentmagnet kann auch durch jeweilige Teil-Permanentmagnete die in jeweiligen radial äusseren Bereichen des propellerförmigen Drehantriebselementes und/oder der weiteren propellerförmigen Drehantriebselemente angeordnet sind gebildet werden.

Gemäss einer Ausführungsform sind die jeweiligen Peripher-Drehachsen hauptsächlich parallel oder quer zur Haupt-Drehachse angeordnet.

Eine solche Anordnung ermöglicht, unter anderem, die Verteilung einer möglichst hohen Anzahl an elektrischen Generatoren entlang der Haupt-Drehachse und einer Umfangsrichtung der Wand.

Gemäss einer Ausführungsform weist der Haupt-Permanentmagnet einen Nordpol und einen Südpol auf. Die Haupt-Drehachse verläuft zwischen dem Nord- und Südpol so, dass bei einer Drehung des Haupt-Permanentmagneten um die Haupt-Drehachse alternierend jeweils der Nordpol und der Südpol einem jeweiligen Peripher-Permanentmagneten am nächsten ist.

Mittels einer so entstehenden magnetischen Wechselwirkung kann die Drehung des Haupt-Permanentmagneten eine Drehung der Peripher-Permanentmagnete bewirken. Diese magnetische Wechselwirkung basiert auf der Annäherung des Nordpols des Haupt-Permanentmagneten an einen jeweiligen Peripher-Permanentmagneten und auf der darauffolgenden Entfernung des Nordpols vom jeweiligen Peripher-Permanentmagneten und der Annäherung des Südpols des Haupt-Permanentmagneten an den jeweiligen Peripher-Permanentmagneten.

Gemäss einer Ausführungsform ist ein jeweiliger Peripher-Permanentmagnet mittels eines propellerförmigen oder scheibenförmigen Antriebselements an eine drehbare Antriebswelle eines jeweiligen elektrischen Generators gekoppelt, insbesondere und an einem radial äusseren Bereich des Antriebselements befestigt.

Gemäss einer Ausführungsform ist das Medium Wasser oder Luft.

Gemäss einer Ausführungsform trennt die Wand den Strömungsraum mediumdicht von den Peripher-Permanentmagneten und elektrischen Generatoren ab.

Die mediumdichte Abtrennung bewirkt dabei, dass das, durch den Strömungsraum strömende, Medium nicht durch die Wand zu dem Raum in dem die elektrischen Generatoren angeordnet sind gelangen kann. Dadurch kann beispielsweise eine Kontamination der elektrischen Generatoren oder des Raums in dem die elektrischen Generatoren angeordnet sind durch das Medium verhindert werden.

Gemäss einer Ausführungsform weist der Drehantrieb eine Kopplungsvorrichtung auf zur Kopplung an eine drehbare Vorrichtung.

Dadurch wird eine Möglichkeit bereitgestellt die Generatorvorrichtung an eine drehbare Vorrichtung zu koppeln. Beispielsweise kann dadurch die Generatorvorrichtung an eine drehbare Vorrichtung, die die Bewegung eines Förderbands bewirkt, gekoppelt werden.

Die Kopplungsvorrichtung kann dabei dazu ausgelegt sein die Generatorvorrichtung mit der drehbaren Vorrichtung mittels Formschluss und/oder Reibungsschluss zu koppeln. Ein Formschluss kann beispielsweise mittels entsprechender Formüberstände des Drehantriebs, die in dazu korrespondierende Formausnehmungen der drehbaren Vorrichtung passen, realisiert werden. Ein Reibungsschluss kann beispielsweise mittels Klemmvorrichtungen des Drehantriebs realisiert werden. Typischerweise wird dadurch die Drehantriebswelle drehfest mit der drehbaren Vorrichtung verbunden.

Gemäss einer Ausführungsform ist die Wand mit einem elektrischen Leiter spulenförmig so umwickelt, dass bei einer Drehung des Haupt-Permanentmagneten ein Strom im elektrischen Leiter induziert wird, insbesondere wobei der Haupt-Permanentmagnet und die mit einem elektrischen Leiter spulenförmig umwickelte Wand Teile eines elektrischen Generators bilden, und/oder die elektrischen Generatoren eine erfindungsgemässe Generatorvorrichtung umfassen.

Der elektrische Leiter kann beispielsweisen ein Kupferdraht sein. Die Wicklung kann beispielsweise parallel zur Haupt-Drehachse und auch quer dazu erfolgen. Durch die spulenförmige Umwicklung der Wand mit einem elektrischen Leiter wird durch die Generatorvorrichtung Bewegungsenergie in elektrische Energie umgewandelt. Besonders vorteilhaft bei dieser Ausführungsform ist, dass sowohl das sich mittels Drehung des Haupt-Permanentmagneten ändernde Magnetfeld als auch das/die sich mittels Drehung der Peripher-Permanentmagnete ändernde/n Magnetfeld/er zu einer Umwandlung von Bewegungsenergie in elektrische Energie beitragen. D.h. sowohl die Drehung des Haupt-Permanentmagneten als auch die Drehung der Peripher-Permanentmagnete trägt zur Energieumwandlung bei.

Die Erfindung betrifft auch die Verwendung einer erfindungsgemässen Generatorvorrichtung in einer bewegbaren Vorrichtung zur Aufladung eines Stromspeichers der bewegbaren Vorrichtung, wobei durch die Bewegung der bewegbaren Vorrichtung der Drehantrieb antreibbar ist, insbesondere wobei die bewegbare Vorrichtung ein Fahrzeug, Wasserfahrzeug oder Flugzeug ist und der Drehantrieb mittels eines durch die Bewegung des Fahrzeugs, Wasserfahrzeugs oder Flugzeugs erzeugtes strömendes Mediums antreibbar ist.

Beispielsweise kann die Generatorvorrichtung in einem Elektroauto dazu verwendet werden, um die Batterie des Elektroautos aufzuladen. Die Generatorvorrichtung ist dann so am Elektroauto angeordnet, dass bei Fahrt des Elektroautos Luft den Drehantrieb umströmt wodurch eine Drehung des Haupt-Permanentmagneten bewirkt wird. Die Generatorvorrichtung kann beispielsweise auch an einem Schiff so angeordnet sein, dass bei Fahrt des Schiffes auf dem Wasser, Wasser den Drehantrieb umströmt wodurch eine Drehung des Haupt-Permanentmagneten bewirkt wird. Dadurch kann ein Stromspeicher des Schiffs aufgeladen werden.

Die erfindungsgemässe Generatorvorrichtung ermöglicht somit einen flexiblen Einsatz auch in diversen Umgebungen.

### -KURZE BESCHREIBUNG DER FIGUREN-

Die erfindungsgemässe Generatorvorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Figur 1: in einer Vorderansicht eine Generatorvorrichtung gemäss einer Ausführungsform der Erfindung;
- Figur 2: in einer Seitenansicht einen Teil der Generatorvorrichtung gemäss einer Ausführungsform der Erfindung;
- Figur 3: in einer Seitenansicht einen Teil der Generatorvorrichtung gemäss einer Ausführungsform der Erfindung.

### -DETAILLIERTE BESCHREIBUNG DER ERFINDUNG-

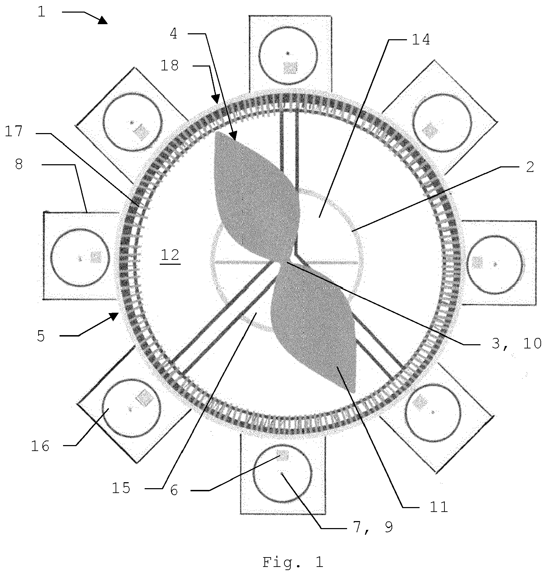

**Figur 1** zeigt in einer Vorderansicht eine Generatorvorrichtung 1 gemäss einer Ausführungsform der Erfindung. Die Generatorvorrichtung hat einen Haupt-Permanentmagneten 2 der sich entlang einer Haupt-Drehachse 3 erstreckt und um diese drehbar gelagert ist. Der Drehantrieb 4 der Generatorvorrichtung hat ein propellerförmig ausgebildetes Drehantriebselement und eine Drehantriebswelle 10. Die Wand 5 der Generatorvorrichtung 1 erstreckt sich entlang der Haupt-Drehachse 3 und entlang einer Umfangsrichtung um den Haupt-Permanentmagneten 2. In der Vorderansicht gezeigt sind acht Peripher-Permanentmagnete 6 die um jeweilige Peripher-Drehachsen 7 drehbar gelagert sind.

In der Vorderansicht der **Figur 1** sind acht elektrische Generatoren 8 gezeigt. Die acht Peripher-Permanentmagnete sind jeweils mit einer drehbaren Antriebswelle 9 eines jeweiligen elektrischen Generators gekoppelt.

Die Wand 5 ist zwischen dem Haupt-Permanentmagneten und den Peripher-Permanentmagneten angeordnet und zylinderförmig. Die Wand ist mit einem elektrischen Leiter 17 spulenförmig 18 umwickelt, sodass eine Drehung des Haupt-Permanentmagneten einen elektrischen Strom in dem elektrischen Leiter induziert.

Der Drehantrieb der in **Figur 1** gezeigten Generatorvorrichtung hat eine Drehantriebswelle 10. Das propellerförmige Drehantriebselement 11 ist dabei drehfest mit der Drehantriebswelle 10 verbunden.

Die Generatorvorrichtung der **Figur 1** weist einen Strömungsraum 12 auf durch den ein strömungsfähiges Medium strömen kann, sodass dadurch eine Drehung des Haupt-Permanentmagneten bewirkt wird.

Der in **Figur 1** gezeigte Haupt-Permanentmagnet hat einen Nordpol 14 und einen Südpol 15. Die Peripher-Permanentmagnete sind jeweils mit jeweiligen scheibenförmigen Antriebselementen 16 an eine jeweilige drehbare Antriebswelle eines jeweiligen elektrischen Generators gekoppelt.

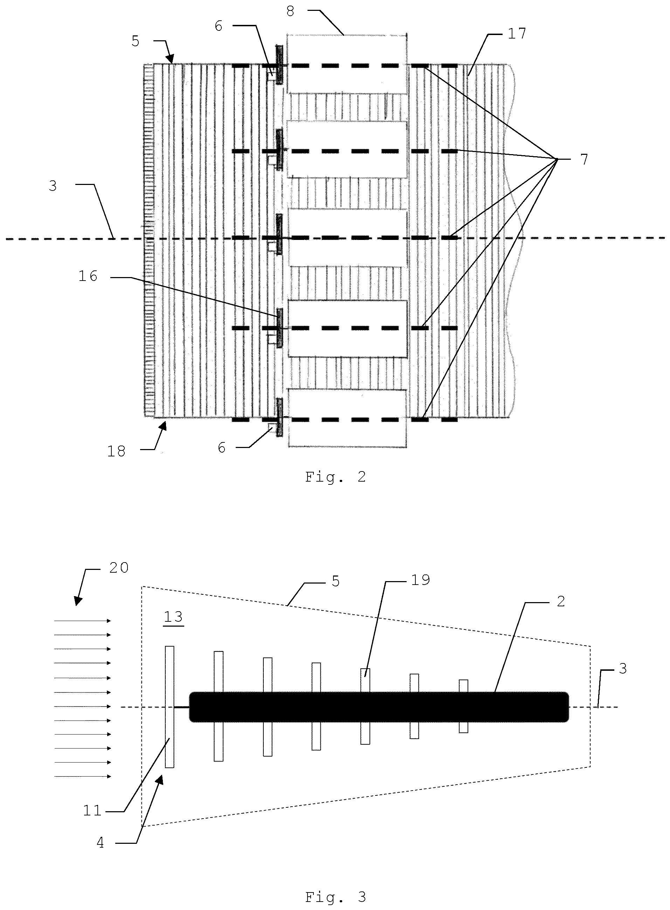

**Figur 2** zeigt in einer Seitenansicht einen Teil der Generatorvorrichtung gemäss einer Ausführungsform der Erfindung. Die Seitenansicht zeigt die Wand 5, die sich entlang der Haupt-Drehachse 3 und einer Umfangsrichtung um den Haupt-Permanentmagneten 2 erstreckt und zwischen dem Haupt-Permanentmagneten 2 und den Peripher-Permanentmagneten 6 angeordnet ist. Die Wand 5 ist zylinderförmig und mit einem elektrischen Leiter 17 spulenförmig 18 umwickelt. **Figur 2** zeigt elektrische Generatoren 8 die so entlang der Haupt-Drehachse 3 und der Umfangsrichtung verteilt, insbesondere und an der Wand 5 befestigt, angeordnet sind, dass eine Drehung des Haupt-Permanentmagneten, mittels des Drehantriebs, eine Drehung der Peripher-Permanentmagnete 6 um jeweilige Peripher-Drehachsen 7 und dadurch eine Drehung der Antriebswellen 9 der elektrischen Generatoren bewirkt. Die elektrischen Generatoren sind so angeordnet, dass die Peripher-Drehachsen 7 jeweils hauptsächlich parallel zur Haupt-Drehachse 3 angeordnet sind. Die Peripher-Permanentmagnete sind jeweils mit jeweiligen scheibenförmigen Antriebselementen 16 an eine jeweilige drehbare Antriebswelle eines jeweiligen elektrischen Generators gekoppelt.

**Figur 3** zeigt rein schematisch in einer Seitenansicht einen Teil der Generatorvorrichtung gemäss einer Ausführungsform der Erfindung. Mittig angeordnet ist der Haupt-Permanentmagnet 2, der sich entlang der Haupt-Drehachse 3 erstreckt und um die Haupt-Drehachse drehbar gelagert ist. Der in **Figur 3** gezeigte Drehantrieb weist propellerförmige Drehantriebselemente 19 auf die drehfest mit der Drehantriebswelle verbunden sind. Die Wand 5 ist kegelförmig und bildet einen kegelförmigen Strömungsraum 13. Der Strömungsraum verengt sich radial in eine Richtung entlang der Drehantriebswelle. Die propellerförmigen Drehantriebselemente 19 sind entlang der Drehantriebswelle angeordnet, wobei eine radiale Ausdehnung eines jeweiligen propellerförmigen Drehantriebselements an eine jeweilige radiale Ausdehnung des Strömungsraumes 13 so angepasst ist, dass das propellerförmige Drehantriebselement innerhalb des Strömungsraums antreibbar angeordnet ist. In Figur 3 angedeutet ist die Strömungsrichtung 20 des strömungsfähigen Mediums, welches die Drehung des Haupt-Permanentmagneten bewirkt.

Es versteht sich, dass diese dargestellten Figuren nur mögliche Ausführungsbeispiele schematisch darstellen.

## Patentansprüche

1. Generatorvorrichtung (1) zur Erzeugung von elektrischem Strom basierend auf einer magnetischen Wechselwirkung zwischen einem drehbaren Haupt-Permanentmagneten und zumindest zwei drehbaren Peripher-Permanentmagneten, mit
o dem Haupt-Permanentmagneten (2), der sich entlang einer Haupt-Drehachse (3) erstreckt und um die Haupt-Drehachse drehbar gelagert ist,
o einem Drehantrieb (4) zum Drehen des Haupt-Permanentmagneten,
o einer Wand (5), die sich entlang der Haupt-Drehachse und einer Umfangsrichtung um den Haupt-Permanentmagneten erstreckt, und
o den zumindest zwei, insbesondere einer Vielzahl, Peripher-Permanentmagneten (6), wobei die Peripher-Permanentmagnete um jeweilige Peripher-Drehachsen (7) drehbar gelagert sind,
**dadurch gekennzeichnet, dass**
∘ die Generatorvorrichtung zumindest zwei, insbesondere eine Vielzahl, elektrischer Generatoren (8) aufweist,
∘ die Peripher-Permanentmagnete jeweils mit einer drehbaren Antriebswelle (9) eines jeweiligen elektrischen Generators gekoppelt sind,
∘ die Wand zwischen dem Haupt-Permanentmagneten und den Peripher-Permanentmagneten angeordnet ist, und
∘ die zumindest zwei elektrischen Generatoren so entlang der Haupt-Drehachse und der Umfangsrichtung verteilt, insbesondere und an der Wand befestigt, angeordnet sind, dass eine Drehung des Haupt-Permanentmagneten, mittels des Drehantriebs, eine Drehung der Peripher-Permanentmagnete und dadurch der Antriebswellen der elektrischen Generatoren bewirkt.

2. Generatorvorrichtung nach Anspruch 1, **dadurch gekennzeichnet, dass** der Drehantrieb eine Drehantriebswelle (10) aufweist und der Haupt-Permanentmagnet drehfest mit der Drehantriebswelle verbunden ist.

3. Generatorvorrichtung nach Anspruch 2, **dadurch gekennzeichnet, dass** der Drehantrieb ein propellerförmiges Drehantriebselement (11) aufweist, das drehfest mit der Drehantriebswelle verbunden ist, insbesondere wobei der Haupt-Permanentmagnet als das propellerförmige Drehantriebselement ausgebildet ist.

4. Generatorvorrichtung nach einem der Ansprüche 1 bis 3, **dadurch gekennzeichnet, dass** die Wand entlang der Haupt-Drehachse einen Strömungsraum (12) bildet der dazu ausgelegt ist von einem Medium durchströmt zu werden, wobei der Haupt-Permanentmagnet und der Drehantrieb so im Strömungsraum angeordnet sind, dass ein durch den Strömungsraum strömendes Medium den Drehantrieb, insbesondere mittels des propellerförmigen Drehantriebselements, antreibt.

5. Generatorvorrichtung nach Anspruch 4, **dadurch gekennzeichnet, dass** die Wand Öffnungen aufweist, die dazu ausgelegt sind von dem durch den Strömungsraum strömenden Medium durchströmt zu werden, sodass das Medium zu den elektrischen Generatoren strömt.

6. Generatorvorrichtung nach einem der Ansprüche 1 bis 5, **dadurch gekennzeichnet, dass** die Wand zylinderförmig ist.

7. Generatorvorrichtung nach Anspruch 3 bis 6, **dadurch gekennzeichnet, dass**
∘ der Drehantrieb weitere propellerförmige Drehantriebselemente (19) aufweist die drehfest mit der Drehantriebswelle verbunden sind, und
∘ die Wand einen kegelförmigen Strömungsraum (13) bildet, wobei
∘ sich der Strömungsraum in eine Richtung entlang der Drehantriebswelle radial verengt, und
∘ die propellerförmigen Drehantriebselemente entlang der Drehantriebswelle angeordnet sind, insbesondere wobei eine radiale Ausdehnung eines jeweiligen propellerförmigen Drehantriebselements an eine jeweilige radiale Ausdehnung des Strömungsraumes so angepasst ist, dass das propellerförmige Drehantriebselement innerhalb des Strömungsraums antreibbar angeordnet ist.

8. Generatorvorrichtung nach einem der Ansprüche 1 bis 7, **dadurch gekennzeichnet, dass** die Peripher-Drehachsen jeweils hauptsächlich parallel oder quer zur Haupt-Drehachse angeordnet sind.

9. Generatorvorrichtung nach einem der Ansprüche 1 bis 8, **dadurch gekennzeichnet, dass** der Haupt-Permanentmagnet einen Nordpol (14) und einen Südpol (15) aufweist und die Haupt-Drehachse zwischen dem Nord- und Südpol so verläuft, dass bei einer Drehung des Haupt-Permanentmagneten um die Haupt-Drehachse alternierend jeweils der Nordpol und der Südpol einem jeweiligen Peripher-Permanentmagneten am nächsten ist.

10. Generatorvorrichtung nach einem der Ansprüche 1 bis 9, **dadurch gekennzeichnet, dass** ein jeweiliger Peripher-Permanentmagnet mittels eines propellerförmigen oder scheibenförmigen Antriebselements (16) an eine drehbare Antriebswelle eines jeweiligen elektrischen Generators gekoppelt ist, insbesondere und an einem radial äusseren Bereich des Antriebselements befestigt ist.

11. Generatorvorrichtung nach einem der Ansprüche 4 bis 10, **dadurch gekennzeichnet, dass** das Medium Wasser oder Luft ist.

12. Generatorvorrichtung nach einem der Ansprüche 4 bis 11, **dadurch gekennzeichnet, dass** die Wand den Strömungsraum mediumdicht von den Peripher-Permanentmagneten und elektrischen Generatoren abtrennt.

13. Generatorvorrichtung nach einem der Ansprüche 1 bis 12, **dadurch gekennzeichnet, dass** der Drehantrieb eine Kopplungsvorrichtung aufweist zur Kopplung an eine drehbare Vorrichtung.

14. Generatorvorrichtung nach einem der Ansprüche 1 bis 13, **dadurch gekennzeichnet, dass**
∘ die Wand mit einem elektrischen Leiter (17) spulenförmig (18) so umwickelt ist, dass bei einer Drehung des Haupt-Permanentmagneten ein Strom im elektrischen Leiter induziert wird, insbesondere wobei der Haupt-Permanentmagnet und die mit einem elektrischen Leiter spulenförmig umwickelte Wand Teile eines elektrischen Generators bilden,
und/oder
∘ die elektrischen Generatoren eine Generatorvorrichtung nach einem der Ansprüche 1 bis 14 umfassen.

15. Verwendung einer Generatorvorrichtung nach einem der Ansprüche 1 bis 14 in einer bewegbaren Vorrichtung zur Aufladung eines Stromspeichers der bewegbaren Vorrichtung, wobei durch die Bewegung der bewegbaren Vorrichtung der Drehantrieb antreibbar ist, insbesondere wobei die bewegbare Vorrichtung ein Fahrzeug, Wasserfahrzeug oder Flugzeug ist und der Drehantrieb mittels eines durch die Bewegung des Fahrzeugs, Wasserfahrzeugs oder Flugzeugs erzeugtes strömendes Medium antreibbar ist.
